(19) Europäisches Patentamt / European Patent Office / Office européen des brevets

(11) EP 3 565 048 A1

(12) **EUROPEAN PATENT APPLICATION**
published in accordance with Art. 153(4) EPC

(43) Date of publication:
06.11.2019 Bulletin 2019/45

(51) Int Cl.:
*H01M 8/18* (2006.01)　　　*H01M 4/86* (2006.01)
*H01M 8/02* (2016.01)

(21) Application number: 17887207.3

(22) Date of filing: 25.12.2017

(86) International application number:
PCT/JP2017/046419

(87) International publication number:
WO 2018/123965 (05.07.2018 Gazette 2018/27)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 28.12.2016 JP 2016256510

(71) Applicant: Showa Denko K.K.
Tokyo 105-8518 (JP)

(72) Inventor: TOMITA Miyuki
Tokyo 105-8518 (JP)

(74) Representative: Strehl Schübel-Hopf & Partner
Maximilianstrasse 54
80538 München (DE)

(54) **REDOX FLOW BATTERY**

(57) The purpose of the present invention is to provide a redox flow battery in which corrosion and deterioration of a positive electrode can be suppressed and which can maintain a high charge and discharge capacity for a long period of time. The redox flow battery 1 according to the present invention is charged and discharged by circulation of an electrolyte, which contains vanadium as an active material, in a battery cell 2 including a positive electrode 10, a negative electrode 20, and a membrane 30 interposed between the electrodes 10 and 20, wherein: at least the positive electrode 10 or the negative electrode 20 contains carbon nanotubes the average diameter of which is 150 nm or smaller; and the porosity of the negative electrode 20 is higher than the porosity of the positive electrode.

FIG. 1

EP 3 565 048 A1

**Description**

TECHNICAL FIELD

The present invention relates to a redox flow battery that performs charge/discharge by circulating an electrolyte containing vanadium as an active material to a battery cell.

BACKGROUND ART

As an electric power storage battery, development of various batteries has been in progress, and examples thereof include an electrolyte circulation type battery, a so-called redox flow battery. In the redox flow battery, a positive-electrode electrolyte and a negative-electrode electrolyte are supplied and circulated to a battery cell including a positive electrode, a negative electrode, and a membrane interposed between both the electrodes, and charge/discharge is performed through an electric power converter (for example, an AC/DC converter or the like). As the electrolytes, an aqueous solution that contains a metal ion (active material) of which a valence number varies through redox is used. For example, a vanadium-based redox flow battery that uses vanadium (V) as the active material of the positive electrode and the negative electrode is well known.

However, as a main cause for deteriorating durability of the redox flow battery, corrosion deterioration of an electrode due to an overvoltage may be exemplified. Patent Document 1 suggests a configuration in which for example, a catalytic active area of a negative electrode is made greater than a catalytic active area of a positive electrode to suppress the corrosion deterioration of the positive electrode due to the overvoltage. Occurrence of a high overvoltage in the positive electrode is suppressed by enlarging the catalytic active area of the negative electrode to prevent local exhaustion of a negative-electrode electrolyte.

Patent Document 1: Japanese Patent No. 5837704

DISCLOSURE OF THE INVENTION

Problems to be Solved by the Invention

However, sufficient examination on conductivity of an electrode is not made, and there is a problem that a sufficiently high charge and discharge capacity is not obtained. In addition, in a case of using a high-conductivity electrode in which carbon nanotubes are mixed in a carbon fiber, an electrode filling density becomes relatively higher. Accordingly, it is difficult to completely suppress the local exhaustion of the negative-electrode electrolyte of a negative electrode surface that faces a positive electrode surface only by simply enlarging a negative electrode area. Accordingly, it cannot be said that an effect of suppressing the corrosion deterioration of the positive electrode is sufficient.

The invention has been suggested in consideration of such circumstances, and an object thereof is to provide a redox flow battery in which corrosion deterioration of a positive electrode is suppressed, and which is capable of maintaining a high charge and discharge capacity over a long period.

Means for Solving the Problems

The present inventors have obtained the following finding and have accomplished the invention. Specifically, in a redox flow battery in which at least one of a positive electrode and a negative electrode contains carbon nanotubes, when a porosity of the negative electrode is set to be greater than a porosity of the positive electrode, corrosion deterioration of the positive electrode is suppressed, and thus a high charge and discharge capacity can be maintained over a long period.

(1) The invention is a redox flow battery that performs charge/discharge by circulating an electrolyte containing vanadium as an active material to a battery cell including a positive electrode, a negative electrode, and a membrane interposed between both the electrodes. At least one of the positive electrode and the negative electrode contains carbon nanotubes having an average diameter of 150 nm or less, and a porosity of the negative electrode is greater than a porosity of the positive electrode.

(2) In addition, the invention is the redox flow battery according to (1), wherein a porosity ratio (negative-electrode porosity/positive-electrode porosity) of the negative electrode with respect to the positive electrode is 1.1 or more to 2.0 or less.

(3) In addition, the invention is the redox flow battery according to (1) or (2), wherein the porosity of the negative electrode is 65% or more to 99% or less.

(4) In addition, the invention is the redox flow battery according to any one of (1) to (3), wherein the positive electrode and the negative electrode contain carbon nanotubes having an average diameter of 150 nm or less, and the average diameter of the carbon nanotubes contained in the negative electrode is greater than the average diameter of the carbon nanotubes contained in the positive electrode.

(5) In addition, the invention is the redox flow battery according to any one of (1) to (4), wherein a content ratio (negative-electrode content/positive-electrode content) of the content of the carbon nanotubes which are contained in the negative electrode and have an average diameter of 150 nm or less with respect to the content of the carbon nanotubes which are contained in the positive electrode and have an average diameter of 150 nm or less is greater than 0 and equal to or less than 0.95.

(6) In addition, the invention is the redox flow battery according to any one of (1) to (5), wherein a facing area ratio (negative-electrode facing area/positive-electrode facing area) of the negative electrode with respect to the positive electrode is 1.05 or more to 1.7 or less.

Effects of the Invention

According to the invention, it is possible to provide a redox flow battery in which corrosion deterioration of the positive electrode is suppressed, and which is capable of retaining a high charge and discharge capacity over a long period.

BRIEF DESCRIPTION OF THE DRAWINGS

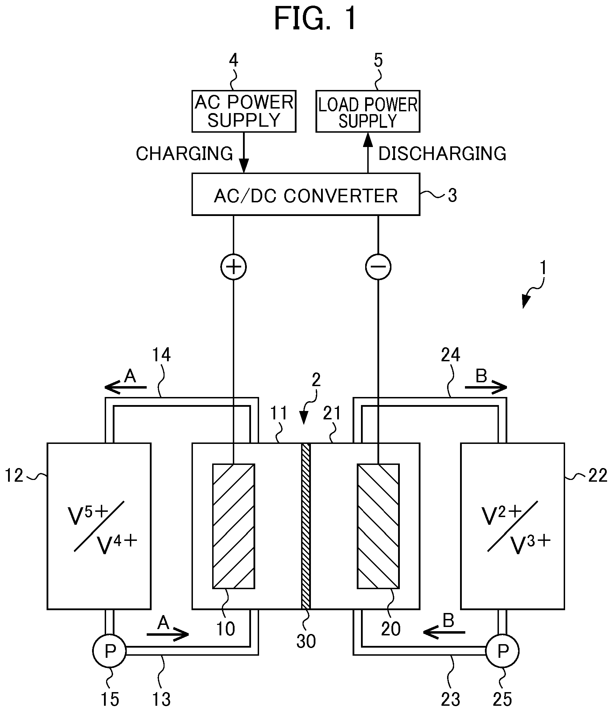

Fig. 1 is a configuration diagram illustrating a configuration of a redox flow battery according to an embodiment.

PREFERRED MODE FOR CARRYING OUT THE INVENTION

A specific embodiment of the invention will be described in detail with reference to the accompanying drawings. Drawings used in description may show a characteristic portion in an enlarged manner for easy understanding of characteristics of the invention for convenience, and a dimension ratio of respective constituent elements, and the like may be different from actual values. Note that, the invention is not limited to the following embodiment and various modifications can be made in a range not changing the gist of the invention.

<Redox Flow Battery>

Fig. 1 is a configuration diagram illustrating an example of a redox flow battery according to this embodiment. A redox flow battery 1 according to this embodiment makes a battery cell 2 a minimum unit and uses the battery cell 2 in a single type or in a type called a battery cell stack in which a plurality of sheets of the battery cells 2 are stacked, and performs charge/discharge by circulating an electrolyte containing vanadium as an active material to the battery cell 2. For example, the redox flow battery 1 charges electric power from an AC power supply 4 such as an electric power station through an AC/DC converter 3, and discharges the charged electric power to a load power supply 5 through the AC/DC converter 3.

As a main configuration, the redox flow battery 1 includes the battery cell 2 including a positive-electrode cell 11 in which a positive electrode 10 is embedded, a negative-electrode cell 21 in which a negative electrode 20 is embedded, and a membrane 30 that is interposed between both the electrodes 10 and 20 to isolate both the cells and transmits predetermined ions.

In addition, the redox flow battery 1 includes a positive-electrode electrolyte tank 12 that stores a positive-electrode electrolyte to be circulated and supplied to the positive-electrode cell 11, a positive-electrode outgoing pipe 13 through which the positive-electrode electrolyte is fed from the positive-electrode electrolyte tank 12 to the positive-electrode cell 11, and a positive-electrode return pipe 14 through which the positive-electrode electrolyte is returned from the positive-electrode cell 11 to the positive-electrode electrolyte tank 12. In the positive-electrode outgoing pipe 13, a pump 15 for circulating the positive-electrode electrolyte is disposed.

Similarly, the redox flow battery 1 includes a negative-electrode electrolyte tank 22 that stores a negative-electrode electrolyte to be circulated and supplied to the negative-electrode cell 21, a negative-electrode outgoing pipe 23 through which the negative-electrode electrolyte is fed from the negative-electrode electrolyte tank 22 to the negative-electrode cell 21, and a negative-electrode return pipe 24 through which the negative-electrode electrolyte is returned from the negative-electrode cell 21 to the negative-electrode electrolyte tank 22. In the negative-electrode outgoing pipe 23, a pump 25 for circulating the negative-electrode electrolyte is disposed.

In the redox flow battery 1 having the above-described configuration, the positive-electrode electrolyte in the positive-electrode electrolyte tank 12 is fed to the positive-electrode cell 11 through the positive-electrode outgoing pipe 13 by activating the pump 15. The positive-electrode electrolyte fed to the positive-electrode cell 11 is discharged upward from a downward side of the battery cell 2 through the inside thereof, and then, is returned to the positive-electrode electrolyte tank 12 through the positive-electrode return pipe 14. According to this, the positive-electrode electrolyte circulates in an arrow direction A in the drawing. Similarly, the negative-electrode electrolyte in the negative-electrode electrolyte tank 22 is fed to the negative-electrode cell 21 through the negative-electrode outgoing pipe 23 by activating the pump 25. The negative-electrode electrolyte fed to the negative-electrode cell 21 is discharged upward from a downward side of the negative-electrode cell 21 through the inside thereof, and then, is returned to the negative-electrode electrolyte tank 22 through the negative-electrode return pipe 24. According to this, the negative-electrode electrolyte circulates in an arrow B direction in the drawing.

According to this, a charge/discharge reaction is performed in the battery cell 2 (the positive-electrode cell 11 and the negative-electrode cell 21), and electric power can be extracted or stored. The charge/discharge reaction in the battery cell 2 is as follows.

Positive-electrode cell

Charge: $VO^{2+}(V^{4+}) + H_2O \rightarrow VO_2^+(V^{5+}) + 2H^+ + e^-$
Discharge: $VO_2^+(V^{5+}) + 2H^+ + e^- \rightarrow VO^{2+}(V^{4+}) + H_2O$

Negative-electrode cell

Charge: $V^{3+} + e^- \rightarrow V^{2+}$
Discharge: $V^{2+} \rightarrow V^{3+} + e^-$

Hereinafter, the positive electrode 10, the negative electrode 20, the membrane 30, (positive-electrode electrolyte in) the positive-electrode electrolyte tank 12, and (negative-electrode electrolyte in) the negative-electrode electrolyte tank) 22 will be described in detail.

(Positive Electrode and Negative Electrode)

For example, at least one of the positive electrode 10 and the negative electrode 20 contains carbon nanotubes having an average diameter 150 nm or less in an electrode material composed of a carbon fiber having an average diameter of 1 $\mu$m or greater. By containing the carbon nanotubes of 150 nm or less, the carbon nanotubes are introduced between carbon fibers, and a structure in which the carbon nanotubes straddle between the carbon fibers is obtained. Accordingly, conductivity is improved and a high charge and discharge capacity is obtained. As described later, it is preferable that both electrodes (hereinafter, may be referred to simply as "electrodes") of the positive electrode 10 and the negative electrode 20 contain carbon nanotubes having an average diameter of 150 nm or less as an electrode material from the viewpoint of adjusting a porosity of electrodes while maintaining a high charge and discharge capacity.
Here, in the electrodes containing the carbon nanotubes, conductivity is improved but a porosity in the electrodes decreases. Accordingly, when local exhaustion of the electrolyte is caused, and particularly, when the porosity of the negative electrode becomes smaller than the porosity of the positive electrode, there is a tendency that a high overvoltage locally occurs in the positive electrode due to local exhaustion of the negative-electrode electrolyte, and corrosion deterioration of electrodes is caused. To this end, the redox flow battery 1 according to this embodiment has a characteristic that the porosity of the negative electrode 20 is greater than the porosity of the positive electrode 10. When the porosity of the negative electrode 20 is set to be greater than the porosity of the positive electrode 10, the negative-electrode electrolyte is likely to be retained in the negative electrode 20, and thus transportation of the negative-electrode electrolyte is performed in a satisfactory manner. Accordingly, deficiency of a negative-electrode active material is less likely to occur. As a result, an overvoltage proportional to occurrence of corrosion in the positive electrode 10 is less likely to occur, and thus it is considered that corrosion of the positive electrode 10 can be suppressed.
Here, the carbon nanotubes represent tubular carbon formed from a single-layer or multi-layer graphene sheet. An average diameter of the carbon nanotubes can be obtained as an arithmetic average value of fiber diameters of 100 or more carbon nanotubes which are measured with an electron microscope. In a case where two or more kinds of fiber are mixed, fiber diameters are respectively measured, and the average diameter can be obtained as an arithmetic average value of the fiber diameters. The porosity is a value that is calculated from a sheet density of an electrode and an apparent density of an electrode material by the following equation. The sheet density of the electrode is a value obtained by dividing the mass of a sheet-shaped electrode by a volume calculated by measuring the thickness, a vertical length, and a horizontal length of the sheet-shaped electrode. In addition, the apparent density is a density of the electrode material before being formed in a sheet shape and can be measured in conformity to JIS R 7603. The apparent density in a case where the electrode is formed from two or more kinds of materials is a density of a mixture obtained by mixing electrode materials in a constituent ratio.

$$\text{Porosity (\%)} = 100 - (\text{Sheet density of electrode/an apparent}$$

$$\text{density of electrode material}) \times 100$$

A porosity ratio (negative-electrode porosity/positive-electrode porosity) of the negative electrode 20 with respect to the positive electrode 10 is preferably 1.1 or more to 2.0 or less, and more preferably 1.3 or more to 1.7 or less. When the porosity ratio between the positive electrode 10 and the negative electrode 20 is 1.1 or more, that is, when the porosity of the negative electrode 20 is 1.1 or more times the porosity of the positive electrode 10, local deficiency of the negative-electrode electrolyte (negative-electrode active material) is less likely to occur in the negative electrode 20. Accordingly, in the positive electrode 10, corrosion is less likely to progress due to occurrence of a local overvoltage. In addition, when the porosity ratio between the positive electrode 10 and the negative electrode 20 is set to be more than 2.0, that is, when the porosity of the negative electrode 20 is more than 2.0 times the porosity of the positive electrode 10, there is a tendency that it is difficult to retain balance of an appropriate amount of electrolyte, and a sufficient charge and discharge capacity is not obtained.

Specifically, the porosity of the negative electrode 20 is preferably 65% or more to 99% or less, and more preferably 80% or more to 98% or less. When the porosity of the negative electrode 20 is 65% or more, there is a tendency that a sufficient negative-electrode electrolyte can be retained, corrosion deterioration is suppressed, and a sufficient charge and discharge capacity can be maintained. When the porosity of the negative electrode 20 is 99% or less, there is a tendency that deterioration of mechanical strength can be suppressed.

To make the porosity of the negative electrode 20 greater than the porosity of the positive electrode 10, for example, it is preferable that an average diameter of carbon nanotubes contained in the negative electrode 20 be set to be greater than an average diameter of carbon nanotubes contained in the positive electrode 10. Carbon nanotubes having the larger average diameter are easier to be sparse in the electrode, and thus it is possible to enlarge the porosity.

For example, an electrode material obtained by mixing carbon nanotubes having an average diameter of 30 nm to carbon fibers having an average diameter of 1 $\mu$m is used as the positive electrode 10, and an electrode material obtained by mixing carbon nanotubes having an average diameter of 100 nm to carbon fibers having an average diameter of 1 $\mu$m is used as the negative electrode 20. In any of the electrode materials, the mixed carbon nanotubes enter a gap of the carbon fibers. According to this, it is possible to make the porosity of the negative electrode 20 more than the porosity of the positive electrode 10. As in the carbon nanotubes, the average diameter of the carbon fiber can be obtained as an arithmetic average value of diameters of 100 or more carbon fibers which are measured with an electron microscope. In a case where two or more kinds of fiber are mixed, fiber diameters are respectively measured, and the average diameter can be obtained as an arithmetic average value of the fiber diameters.

In addition, to make the porosity of the negative electrode 20 greater than the porosity of the positive electrode 10, it is preferable that a content ratio (negative-electrode content/positive-electrode content) of the content of carbon nanotubes, which are contained in the negative electrode 20 and have an average diameter of 150 nm or less, to the content of carbon nanotubes, which are contained in the positive electrode 10 and have an average diameter of 150 nm or less, is set to be more than 0 and equal to or less than 0.95, and more preferably 0.5 or more to 0.9 or less. When the content of the carbon nanotubes contained in the positive electrode 10 is set to be more than the content of the carbon nanotubes contained in the negative electrode 20, it is possible to make the porosity of the negative electrode 20 relatively great.

For example, the negative electrode 20 uses an electrode material, in which 20 parts by mass of carbon nanotubes having an average diameter of 150 nm is blended to 100 parts by mass of carbon fiber having an average diameter of 1 $\mu$m, and the carbon nanotubes are in a state of being attached and entangled to the carbon fiber. On the other hand, the positive electrode 10 uses an electrode material, in which carbon nanotubes having an average diameter of 150 nm is blended to 100 parts by mass of carbon fiber having an average diameter of 1 $\mu$m in a greater ratio in comparison to the negative electrode, and the carbon nanotubes are in a state of being attached and entangled to the carbon fiber. According to this, the porosity of the negative electrode 20 can be set to be more than the porosity of the positive electrode 10.

Moreover, the average diameter of the carbon nanotubes used in the electrode materials is not limited to the above-described average diameter, and can be appropriately selected as long as the average diameter is 150 nm or less and the porosities of the electrodes are satisfied. The carbon nanotubes used in the electrode materials may use a plurality of kinds of carbon nanotubes having average diameters different from each other. For example, first carbon nanotubes having an average diameter of 100 nm or greater and second carbon nanotubes having an average diameter of 30 nm or less may be used, and the second carbon nanotube may be in a state of being straddled to the first carbon nanotubes, or in a state of being entangled to the first carbon nanotubes. In a case of using two or more kinds of carbon nanotubes, a diameter of a mixture of the carbon nanotubes only needs to be set to 150 nm or less as an average value.

In addition, it is preferable that the electrode material contain a water-soluble conductive polymer. The water-soluble polymer is adsorbed to surfaces of the carbon nanotubes, and hydrophilizes the surfaces of the originally water-repellent carbon nanotubes. Typically, an OH group, a COOH group, or the like may be introduced to a surface of a carbon material to hydrophilize the surface, but it is preferable to contain the conductive polymer because electric resistance of an obtained electrode is lowered. The reason why the electric resistance of the electrode is lowered when hydrophilic property becomes higher is as follows. Specifically, an electrolyte of a redox flow battery is an aqueous solution, and the electrolyte penetrates into the electrode formed from carbon nanotubes, and thus an electrode reaction can be efficiently caused to occur.

The water-soluble conductive polymer is preferable to be a conductive polymer including a sulfo group, and is more preferable to be polyisothianaphthene sulfonic acid. When the water-soluble conductive polymer includes the sulfo group, it becomes a self-doping type conductive polymer, and thus stable conductivity can be exhibited. In addition, the sulfo group is also a hydrophilic group, and has an advantage that affinity with an electrolyte is high. Specially, as an iosthianaphthene skeleton includes a benzene ring having $\pi$ electrons, it has affinity with $\pi$ electrons of a skeleton of carbon nanotubes which constitute the electrode. Accordingly, the water-soluble conductive polymer is more preferable to be polyisothianaphthene sulfonic acid.

With regard to molding of the electrode material, the electrode material may be molded by appropriately using additives such as a catalytic metal and a binder in combination with the electrode material. Although a shape of the electrode is not particularly limited, in general, it is a sheet shape (felt sheet shape). A method of molding the electrode material into the sheet shape is not particularly limited, and for example, includes film press molding, a papermaking method in which the electrode material is dispersed in an appropriate dispersion medium and then, is casted, and the like. After molding, the sheet-shaped electrode material may be cut out in a predetermined size.

The positive electrode 10 and the negative electrode 20 may have the same size, but it is preferable that a facing area ratio (a negative-electrode facing area/a positive-electrode facing area) of the negative electrode 20 with respect to the positive electrode 10 is set to be a range of 1.05 to 1.7. In addition, it is preferable that the positive electrode 10 is disposed to be within a range of the facing surface of the negative electrode 20 which the positive electrode 10 faces. According to this, in the negative electrode 20, deficiency of a negative-electrode active material is less likely to occur in a more reliable manner. As a result, an overvoltage is less likely to occur in the positive electrode 10, and thus it is possible to reliably suppress corrosion of the positive electrode 10.

(Positive-Electrode Electrolyte Tank)

The positive-electrode electrolyte tank 12 stores a positive-electrode electrolyte, and communicates with the positive-electrode cell 11 through the positive-electrode outgoing pipe 13 and the positive-electrode return pipe 14. The positive-electrode electrolyte stored in the positive-electrode electrolyte tank 12 is a sulfuric acid aqueous solution of a vanadium salt, and is a sulfuric acid aqueous solution containing tetravalent and/or pentavalent vanadium. The positive-electrode electrolyte can take a mixed state of tetravalent and pentavalent vanadium ions and pentavalent vanadium ions or a single state of pentavalent vanadium ions in a charge state. A concentration of the tetravalent and/or pentavalent vanadium ions is preferably 1.2 mol/L or more, and more preferably 1.5 mol/L or more. Although the upper limit of the concentration is not particularly limited, it is preferably 4 mol/L or less, and more preferably 3 mol/L or less. In a case where the concentration of the vanadium ions is excessively small, an energy density of a battery tends to decrease. In a case where the concentration of the vanadium ions is excessively great, precipitates are likely to precipitate, and thus the energy density and charge/discharge efficiency tend to deteriorate.

A sulfuric acid concentration of the positive-electrode electrolyte is preferably 0.5 mol/L or more to 6 mol/L or less, and more preferably 1 mol/L or more to 3 mol/L or less. When the sulfuric acid concentration of the positive-electrode electrolyte is excessively small, vanadium pentoxide ($V_2O_5$) that is a pentavalent vanadium compound is likely to precipitate.

Note that, the positive-electrode electrolyte may contain additives such as oxo acid including nitric acid, a protective colloid agent, and a complexing agent which are known in the related art to prevent precipitation of the precipitates.

(Negative-Electrode Electrolyte Tank)

The negative-electrode electrolyte tank 22 stores the negative-electrode electrolyte and communicates with the negative-electrode cell 21 through the negative-electrode outgoing pipe 23 and the negative-electrode return pipe 24.

The negative-electrode electrolyte stored in the negative-electrode electrolyte tank 22 is a sulfuric acid aqueous solution of a vanadium salt, and is a sulfuric acid aqueous solution containing divalent and/or trivalent vanadium. The negative-electrode electrolyte can take a mixed state of divalent vanadium ions and trivalent vanadium ions or a single state of divalent vanadium ions in a charge state. A concentration of the divalent and/or trivalent vanadium ions is preferably 1.2 mol/L or more, and more preferably 1.5 mol/L or more. Although the upper limit of the concentration is not particularly limited, the upper limit is preferably 4 mol/L or less, and more preferably 3 mol/L or less. In a case where the concentration of the vanadium ions is excessively small, the energy density of the battery tends to decrease, and in a case where the concentration of the vanadium ions is excessively large, precipitates are likely to precipitate, and thus an energy density or battery efficiency tend to deteriorate.

As in the positive-electrode electrolyte, a sulfuric acid concentration of the negative-electrode electrolyte is preferably 0.5 mol/L or more to 6 mol/L or less, and more preferably 1 mol/L or more to 3 mol/L or less. When the sulfuric acid concentration of the negative-electrode electrolyte is excessively large, vanadium sulfate ($V_2(SO_4)_3$) that is a trivalent vanadium compound is likely to precipitate.

Note that, the negative-electrode electrolyte, as in the positive-electrode electrolyte, may contain additives such as oxo acid including nitric acid in the related art, a protective colloid agent, and a complexing agent to prevent precipitation of the precipitates.

(Membrane)

The membrane 30 can use a known membrane. Although the membrane 30 is not particularly limited, for example, it is preferable to be an ion exchange membrane formed from an organic polymer, and can use any of a cation exchange membrane and an anion exchange membrane.

Examples of the cation exchange membrane include a cation exchange membrane obtained through sulfonation of a styrene-divinylbenzene copolymer, a cation exchange membrane in which a sulfonic acid group is introduced into a copolymer of tetrafluoroethylene and perfluorosulfonyl ethoxy vinyl ether, a cation exchange membrane formed from a copolymer of tetrafluoroethylene and a perfluorovinyl ether having a carboxyl group in a side chain, a cation exchange membrane in which a sulfonic acid group is introduced into an aromatic polysulfone copolymer, and the like.

Examples of the anion exchange membrane include an aminated anion exchange membrane obtained by introducing a chloromethyl group into a styrene-divinylbenzene copolymer, an anion exchange membrane obtained through conversion of a vinylpyridine-divinylbenzene copolymer into quaternary pyridinium, an aminated anion exchange membrane obtained by introducing a chloromethyl group into an aromatic polysulfone copolymer, and the like.

EXAMPLES

Hereinafter, the invention will be described in more detail with reference to examples, but the invention is not limited to the examples.

[Example 1]

As a positive electrode, an electrode material (area: 25 cm$^2$) including a carbon fiber having an average diameter of 1 $\mu$m and carbon nanotubes having an average diameter of 30 nm was used. As a negative electrode, an electrode material including a carbon fiber having an average diameter of 1 $\mu$m and carbon nanotubes having an average diameter of 100 nm was used. According to this, as illustrated in Table 1, an experiment battery cell, in which a porosity of the positive electrode was 61%, a porosity of the negative electrode was 91%, a porosity ratio (negative-electrode porosity ratio/positive-electrode porosity ratio) between the positive electrode and the negative electrode was 1.5, a content (mass) ratio (negative-electrode content/positive-electrode content) of the carbon nanotube between the positive electrode and the negative electrode was 0.5, and a facing area ratio (negative-electrode facing area/positive-electrode facing area) between the positive electrode and the negative electrode was 1.2, was prepared. 3.0 mol/L-$H_2SO_4$ aqueous solution in which the concentration of tetravalent vanadium ions is 1.5 mol/L was used as the positive-electrode electrolyte, and 3.0 mol/L-$H_2SO_4$ aqueous solution in which the concentration of trivalent vanadium ions is 1.5 mol/L was used as the negative-electrode electrolyte.

In addition, charge was performed in a current density (100 mA/cm$^2$) while the positive-electrode electrolyte and the negative-electrode electrolyte were respectively supplied and circulated to the positive-electrode cell 11 and the negative-electrode cell 21 in an amount of (18 mL/minute). When a voltage reached 1.6 V, charge was stopped and discharge was subsequently performed in (100 mA/cm$^2$). When a voltage reached 1.0 V, discharge was terminated. The charge and the discharge were repeated for 100 cycles. In addition, a battery capacity retention rate at a hundredth cycle was evaluated. The result is illustrated in Table 1.

Note that, an evaluation criterion of the battery capacity retention rate in Table 1 is as follows.

A: 90% or more
B: equal to or more than 85% and less than 90%
C: equal to or more than 80% and less than 85%
D: less than 80%

[Examples 2 to 9]

The average diameter of the carbon nanotubes used in the positive electrode and the negative electrode, and the porosity ratio, the content ratio, and the facing area ratio of the negative electrode with respect to the positive electrode were changed as illustrated in Table 1, and except for this, a similar charge/discharge cycle as in Example 1 was repeated, and a battery capacity retention rate at a hundredth cycle was evaluated. The result is illustrated in Table 1.

[Example 10]

As the positive electrode, an electrode material (area: 25 cm$^2$) including 50% by mass of carbon nanotubes having an average diameter of 30 nm and 50% by mass of carbon nanotubes having an average diameter of 150 nm was used. As the negative electrode, an electrode material including 10% by mass of carbon nanotubes having an average diameter of 30 nm and 90% by mass of carbon nanotubes having an average diameter of 150 nm was used. In addition, the porosity ratio, the content ratio, and the facing area ratio between positive electrode and the negative electrode were changed as illustrated in Table 1. Except for this, a similar charge/discharge cycle as in Example 1 was repeated, and a battery capacity retention rate at a hundredth cycle was evaluated. The result is illustrated in Table 1.

[Comparative Example 1]

The average diameter of the carbon nanotubes used in the positive electrode and the negative electrode, and the porosity ratio, the content ratio, and the facing area ratio between positive electrode and the negative electrode were changed as illustrated in Table 1, and except for this, a similar charge/discharge cycle as in Example 1 was repeated, and a battery capacity retention rate at a hundredth cycle was evaluated. The result is illustrated in Table 1.

[Table 1]

| | Positive electrode | | Negative electrode | | Negative electrode /positive electrode | | | Battery capacity retention rate [%] |
| | Carbon nanotube | | | | | | | |
| | Average diameter | Porosity | Average diameter | Porosity | Porosity ratio | Content ratio | Area ratio | |
| | [nm] | [%] | [nm] | [%] | | | | |
| Example 1 | 30 | 61 | 100 | 91 | 1.5 | 0.5 | 1.2 | A |
| Example 2 | 15 | 59 | 100 | 65 | 1.1 | 0.6 | 1.2 | B |
| Example 3 | 30 | 89 | 100 | 98 | 1.1 | 0.95 | 1.2 | B |
| Example 4 | 30 | 50 | 80 | 99 | 2.0 | 0.2 | 1.2 | B |
| Example 5 | 30 | 63 | 150 | 95 | 1.5 | 0. 1 | 1.2 | B |
| Example 6 | 30 | 57 | 150 | 85 | 1. 5 | 0.4 | 1.05 | B |
| Example 7 | 30 | 55 | 150 | 82 | 1.5 | 0. 9 | 1.7 | B |
| Example 8 | 30 | 50 | 100 | 75 | 1.5 | 0.7 | 1.0 | C |
| Example 9 | 15 | 45 | 150 | 95 | 2.1 | 0.76 | 1.2 | C |
| Example 10 | 30 | 73 | 30 | 95 | 1.3 | 0.4 | 1 . 2 | A |
| | 150 | | 150 | | | | | |
| Comparative Example 1 | 100 | 80 | 100 | 80 | 1.0 | 1.0 | 1.0 | D |

[Result and Consideration]

In comparison to a redox flow battery in Comparative Example 1 in which the porosity of the positive electrode and the porosity of the negative electrode were the same as each other, in redox flow batteries in Examples 1 to 10 in which the porosity of the negative electrode was greater than the porosity of the positive electrode, the battery capacity retention rate was as high as 80% or more over a long period. Particularly, in Examples 1 to 7, and 10 in which the porosity ratio was 1.1 or more to 2.0 or less, the content ratio was 0.1 or more to 0.95 or less, and the area ratio was 1.05 or more to 1.7 or less between the positive electrode and the negative electrode, the battery capacity retention rate was high as 85% or more.

EXPLANATION OF REFERENCE NUMERALS

| | |
|---|---|
| 1 | REDOX FLOW BATTERY |
| 2 | BATTERY CELL |
| 3 | AC/DC CONVERTER |
| 4 | AC POWER SUPPLY |
| 5 | LOAD POWER SUPPLY |
| 10 | POSITIVE ELECTRODE |
| 11 | POSITIVE-ELECTRODE CELL |
| 12 | POSITIVE-ELECTRODE ELECTROLYTE TANK |
| 13 | POSITIVE-ELECTRODE OUTGOING PIPE |
| 14 | POSITIVE-ELECTRODE RETURN PIPE |
| 15 | PUMP |
| 20 | NEGATIVE ELECTRODE |
| 21 | NEGATIVE-ELECTRODE CELL |
| 22 | NEGATIVE-ELECTRODE ELECTROLYTE TANK |
| 23 | NEGATIVE-ELECTRODE OUTGOING PIPE |
| 24 | NEGATIVE-ELECTRODE RETURN PIPE |
| 25 | PUMP |
| 30 | MEMBRANE |

**Claims**

1. A redox flow battery that performs charge/discharge by circulating an electrolyte containing vanadium as an active material to a battery cell including a positive electrode, a negative electrode, and a membrane interposed between both the electrodes,
   wherein at least one of the positive electrode and the negative electrode contains carbon nanotubes having an average diameter of 150 nm or less, and
   a porosity of the negative electrode is greater than a porosity of the positive electrode.

2. The redox flow battery according to claim 1,
   wherein a porosity ratio (negative-electrode porosity/positive-electrode porosity) of the negative electrode with respect to the positive electrode is 1.1 or more to 2.0 or less.

3. The redox flow battery according to claim 1 or 2,
   wherein the porosity of the negative electrode is 65% or more to 99% or less.

4. The redox flow battery according to any one of claims 1 to 3,
   wherein the positive electrode and the negative electrode contain carbon nanotubes having an average diameter of 150 nm or less, and the average diameter of the carbon nanotubes contained in the negative electrode is greater than the average diameter of the carbon nanotubes contained in the positive electrode.

5. The redox flow battery according to any one of claims 1 to 4,
   wherein a content ratio (negative-electrode content/positive-electrode content) of a content of the carbon nanotubes which are contained in the negative electrode and have an average diameter of 150 nm or less with respect to a content of the carbon nanotubes which are contained in the positive electrode and have an average diameter of 150 nm or less is greater than 0 and equal to or less than 0.95.

6. The redox flow battery according to any one of claims 1 to 5,
   wherein a facing area ratio (negative-electrode facing area/positive-electrode facing area) of the negative electrode with respect to the positive electrode is 1.05 or more to 1.7 or less.

# FIG. 1

## INTERNATIONAL SEARCH REPORT

| | International application No. |
|---|---|
| | PCT/JP2017/046419 |

**A. CLASSIFICATION OF SUBJECT MATTER**
Int.Cl. H01M8/18(2006.01)i, H01M4/86(2006.01)i, H01M8/02(2016.01)i

According to International Patent Classification (IPC) or to both national classification and IPC

**B. FIELDS SEARCHED**

Minimum documentation searched (classification system followed by classification symbols)
Int.Cl. H01M8/18, H01M4/86, H01M8/02

Documentation searched other than minimum documentation to the extent that such documents are included in the fields searched
Published examined utility model applications of Japan    1922-1996
Published unexamined utility model applications of Japan    1971-2018
Registered utility model specifications of Japan    1996-2018
Published registered utility model applications of Japan    1994-2018

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2015-216129 A (SHOWA DENKO KK) 03 December 2015, claims<br>& US 2016/0293970 A1, claims & WO 2015/072452 A1 & EP 3070771 A1 & CN 105706279 A | 1-6 |
| A | WO 2016/182018 A1 (SHOWA DENKO KK) 17 November 2016, claims<br>(Family: none) | 1-6 |
| A | JP 2015-122229 A (SUMITOMO ELECTRIC INDUSTRIES, LTD.) 02 July 2015, claims<br>(Family: none) | 1-6 |

☒  Further documents are listed in the continuation of Box C.    ☐   See patent family annex.

| | |
|---|---|
| *    Special categories of cited documents:<br>"A"   document defining the general state of the art which is not considered to be of particular relevance<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search<br>    08 February 2018 | Date of mailing of the international search report<br>    20 February 2018 |
|---|---|
| Name and mailing address of the ISA/<br>    Japan Patent Office<br>    3-4-3, Kasumigaseki, Chiyoda-ku,<br>    Tokyo 100-8915, Japan | Authorized officer<br><br>Telephone No. |

Form PCT/ISA/210 (second sheet) (January 2015)

**INTERNATIONAL SEARCH REPORT**

International application No.

PCT/JP2017/046419

C (Continuation).   DOCUMENTS CONSIDERED TO BE RELEVANT

| Category* | Citation of document, with indication, where appropriate, of the relevant passages | Relevant to claim No. |
|---|---|---|
| A | JP 2013-65530 A (SUMITOMO ELECTRIC INDUSTRIES, LTD.) 11 April 2013, claims (Family: none) | 1-6 |
| A | JP 2014-130778 A (TOHOKU TECHNO ARCH CO., LTD.) 10 July 2014, claims & WO 2014/104282 A1 | 1-6 |
| P, A | WO 2017/138287 A1 (SUMITOMO ELECTRIC INDUSTRIES, LTD.) 17 August 2017, claims & JP 2017-143002 A | 1-6 |

Form PCT/ISA/210 (continuation of second sheet) (January 2015)

**EP 3 565 048 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 5837704 B